# EUROPÄISCHE PATENTSCHRIFT

(11) **EP 0 446 767 B1**
(45) Veröffentlichungstag und Bekanntmachung des Hinweises auf die Patenterteilung: **12.01.1994**
(21) Anmeldenummer: 91103373.6
(22) Anmeldetag: 06.03.1991
(51) Int. Cl.: B23B 51/10

(54) **Entgratwerkzeug mit Kippmesser**
Deburning tool with pivotable cutting blade
Outil à ébavurer avec lame pivotante

(30) Priorität: 16.03.1990 DE 4008533
(43) Veröffentlichungstag der Anmeldung: 18.09.1991
(60) Teilanmeldung: 93109994.9
(73) Patentinhaber: Heule, Heinrich, CH-9434 Au (CH)
(72) Erfinder: Heule, Heinrich, CH-9434 Au (CH)
(74) Vertreter: Riebling, Peter, Dr.-Ing.

(56) Entgegenhaltungen:
- DD-A- 236 272
- DE-C- 931 024
- US-A- 2 620 689
- US-A- 3 008 360

## Beschreibung

Gegenstand der vorliegenden Erfindung ist ein Entgratwerkzeug mit Kippmesser zum Entgraten von Bohrungsrändern mit gerader oder unrunder Form nach dem Oberbegriff des Patentanspruchs 1.

Ein derartiges Entgratwerkzeug mit Kippmesser ist bereits aus der DE-C-931 024 bekannt, wobei dort das Kippmesser mittels einer stößelartigen Nutenführung gesteuert wird. Diese Steuerung des Kippmessers ist jedoch relativ aufwendig und außerdem ist die Nutensteuerung nicht geeignet, um auf feinfühlige Art, unter Berücksichtigung eines gewißen Schwenkwinkels des Kippmessers, auch unrunde Bohrungsränder entgraten zu können.

Ein weiteres Entgratwerkzeug mit Kippmesser ist aus der US-A-3,008,360 bekannt, welches über einen Zapfen gekippt wird, welcher in das Schneidmesser eingreift. Diese Steuerung des Kippmessers ist jedoch ebenfalls relativ aufwendig und es besteht die Gefahr der raschen Abnützung im Bereich der Nutenführung.

Ein weiteres Entgratwerkzeug der genannten Art ist aus der DD-A-236 272 bekannt, wobei dort das Kippmesser an Steuerkurven einer verdrehbaren Hülse gekippt wird. Hierbei entstehen jedoch auch relativ große Abnutzungserscheinungen an der Steuerkurve.

Aufgabe der vorliegenden Erfindung ist es deshalb, ein Entgratwerkzeug mit Kippmesser der genannten Art so weiterzubilden, daß das Kippmesser bei geringem Aufwand mit geringen Verschleißerscheinungen gekippt werden kann und daß das Kippmesser im Bereich seiner Arbeitsbewegung einen gewißen kleinen Schwenkbereich ausübt, so daß auch unrunde Bohrungsränder bearbeitet werden können.

Die Lösung der gestellten Aufgabe erfolgt nach den Merkmalen des kennzeichnenden Teils des Patentanspruchs 1.

Mit der erfindungsgemäßen technischen Lehre nach dem Anspruch 1 wird der wesentliche Vorteil erzielt, daß in konstruktiv einfacher Art ohne größere Verschleißerscheinungen das Kippmesser im Werkzeughalter bzw. der Messerhalter für einen Entgratvorgang gesteuert werden kann. Die Rastverbindung ist hierbei so ausgebildet, daß das Entgratmesser insbesondere bei unrunden Bohrungsrändern in einem gewißen Bereich auf und ab federnd geführt werden kann, so daß sich ein erweitertes Arbeitsspektrum ergibt.

Die Stabfeder greift zur Steuerung des Kippmessers in Drehrichtung des Kippmessers federnd in die Ausnehmung des Kippmessers bzw. des Werkzeughalters ein, wodurch in gewißem Bereich federnde Schneideigenschaften des Kippmessers erreicht werden, ohne daß bei einer auf und ab Bewegung, insbesondere bei unrunden Bohrungsrändern, die Rastvorrichtung bereits anspricht und das Kippmesser ausrastet.

Bei einer Stößelführung greift ein in axialer Richtung federnder Stößel in die Ausnehmung des Kippmessers bzw. des Werkzeughalters ein, wodurch auch hier in gewißem Bereich das Kippmesser federnd in Richtung der Rastauslösung schneiden kann, ohne daß die Rastvorrichtung anspricht.

Der stößelartige Eingriff der Stabfeder oder eines axial federnden Stößels oder einer federnd gelagerten Kugel in die Ausnehmung des Kippmessers gestattet eine konstruktiv sehr einfache Steuerung der Kippbewegung, wobei nur geringer Verschleiß auftreten kann.

Anstelle des stößelartigen Eingriffs in die Ausnehmung des Kippmessers sind auch weitere Verriegelungen möglich, die als Rastvorrichtung arbeiten, insbesondere ein einarmiger Hebel, der von außen gesteuert wird und der mit seinem freien Ende nach Art einer Raste in die Ausnehmung eingreift.

Bei der Erfindung ist das Schneidmesser zum einen einstückig ausgeführt, wobei die Ausnehmungen an einem kreisrunden Körper des Schneidmessers selbst angeordnet sind, oder das Schneidmesser ist mit einem Messerhalter zweistückig vorgesehen, wobei die Ausnehmung im Körper des Messerhalters angeordnet ist.

Bei der Erfindung wird das Schneidmesser bzw. der Messerhalter innerhalb des Grundkörpers an einem Kippbolzen gelagert, so daß in Verbindung mit der Führung des Schneidmessers bzw. des Messerhalters in dem Grundkörper erhebliche Kräfte in Schneidrichtung übertragen werden können.

Der Einfachheit halber wird in der folgenden Beschreibung lediglich die Verwendung eines einzigen Entgratmessers im Werkzeughalter bzw. im Messerhalter beschrieben. Es fällt unter den Schutzbereich der vorliegenden Erfindung, wenn man im Werkzeug- oder Messerhalter zwei einander gegenüberliegende und gegeneinander gestellte identische Entgratmesser verwendet.

Ebenso fällt es unter den Schutzbereich der vorliegenden Erfindung, wenn ein oder mehrere Entgratmesser nicht nur in einer Entgratebene vorhanden sind (oder auch Schneidebene genannt) sondern wenn mehrere axial übereinander liegende Schneid- oder Entgratebenen im Werkzeug- oder Messerhalter angeordnet sind. Jeder Entgrat- oder Schneidebene wären dann ein oder mehrere Entgratmesser angeordnet.

Wesentliches Merkmal der vorliegenden Erfindung ist also die gesteuerte Verschwenkung des Entgratmessers im Werkzeug- oder Messerhalter über die sehr einfach stößelartig ausgebildete Rastvorrichtung.

Im Ruhe- oder Arbeitszustand ist das Entgratmesser aus einer seitlichen Ausnehmung im Werkzeughalter herausgeschwenkt, so daß die vorder- und rückseitig angebrachten Schneidkanten sich in ihrer Schneidposition befinden.

Der Werkzeughalter wird nun drehend angetrieben und das Entgratmesser trifft mit seiner vorderseitigen Schneidkante auf den zu entgratenden Bohrungsrand auf.

Wichtig ist nun, daß die Schwenkbewegung des Entgratmessers zunächst nicht das Entgraten hindert, sondern daß das Entgratmesser während des Entgratvorganges einen gewißen Schwenkwinkelbereich entgegen der Kraft der Rastvorrichtung in Verbindung mit federnden Eigenschaften der Rastvorrichtung ausführen kann. Hierbei ist der Werkzeug- bzw. Messerhalter drehbar in seiner Drehachse gehalten, wobei das Entgratmesser im Werkzeughalter mit der erfindungsgemäßen federnden Rastvorrichtung so gehalten wird, daß gewiße Schwenkbewegungen des Entgratmessers beispielsweise im Schwenkwinkelbereich von +- 10° im Werkzeughalter während des Entgratvorganges gestattet sind. Damit ist es möglich, Bohrungsunebenheiten am Bohrungsrand von z. B. +-2 mm auszugleichen.

Bei großen Bohrungen und entsprechend groß ausgebildetem Entgratmesser sind natürlich wesentlich größere Ausgleichsspiele zu bewältigen, hier können z. B. Bohrungsüberhöhungen von +- 4 mm ausgeglichen werden.

Die erfindungsgemäße Rastvorrichtung ist also so ausgebildet, daß sie einerseits diesen Schwenkwinkelbereich gestattet aber andererseits dem Entgratmesser einen derartigen Rastdruck zuordnet, daß das Entgratmesser in seiner Schneidposition beim Entgraten des Bohrungsrandes bleibt.

Es ist wichtig, daß sich radial auswärts an die vorder- und rückwärtige Schneidkante des Schneidteiles des Entgratmessers ein sogenannter Kugelteil mit einer zugeordneten Gleitpartie anschließt. Beim weiteren Eindringen des Entgratmessers in die Bohrung geht nun die Schneidkante in die besagte Gleitpartie über. Es kommt damit nicht mehr zu einer Entgrataktion, sondern die Gleitpartie liegt dann am Bohrungsrand auf. Dadurch wird der Gegendruck bei gleichbleibendem Vorschub des Werkzeughalters auf das Entgratmesser so hoch, daß die Rastvorrichtung anspricht und das Entgratmesser eventuell einschließlich dem Messerhalter entgegen der Vorschubrichtung in den Werkzeughalter hinein verschwenkt werden. Die Rastvorrichtung gelangt somit in einen Kurventeil einer Steuerkurve an der Ausnehmung, wo ein relativ geringer Gegendruck besteht, so daß das Entgratmesser mit seiner Gleitpartie unter geringem Gegendruck durch die Bohrung hindurchfährt.

Sobald der Gegendruck auf die Gleitpartie beim Hindurchfahren des Entgratmessers durch die Durchgangsbohrung entfällt, nämlich dann, wenn das Entgratmesser aus der rückwärtigen Bohrung heraustritt, schnappt die Rastvorrichtung wieder zurück und bringt das Entgratmesser wieder in seine ausgeschwenkte Arbeitsposition. In dieser Stellung wird nun der Vorschub des Werkzeughalters umgekehrt, der Werkzeughalter wird axial in seiner Gegenrichtung verschoben und damit legt sich die rückwärtige Schneidkante am Schneidteil des Entgratmessers an der rückwärtigen Bohrungskante an und das Messer kann wiederum nun unter Ausnützung seines Schwenkwinkelbereiches auch unebene Bohrungsränder an der rückwärtigen Bohrung der Durchgangsbohrung entgraten.

Mit dieser technischen Lehre ist es sogar möglich Bohrungsränder zu entgraten, wobei die vordere Bohrung als plane Bohrung ausgebildet ist und die rückwärtige Bohrung als schräge Bohrung, deren Ebene einen Winkel zu der vorher besagten planen Bohrung bildet. Auch diesen schrägen Winkel gleicht das schwenkbar gelagerte Entgratmesser in idealer Weise aus.

In analoger Weise kann statt einer schräg angeordneten Bohrung auch eine beliebig geformte Wellen und Täler aufweisender Bohrungsrand entgratet werden.

Selbstverständlich ist es nach analoger Anwendung der vorliegenden Erfindung möglich nicht nur Durchgangsbohrungen in der Weise zu entgraten, sondern auch Bohrungen die als erweiterte Bohrung im Bereich einer Durchgangsbohrung angeordnet sind. In ebensolcher Weise können z. B. Stufenbohrungen in einem Rohr entgratet werden.

Als Rastvorrichtung zur Zuordnung des entsprechenden Entgratdruckes auf die Entgratmesser sind mehrere verschiedene Ausführungsformen möglich.

Zunächst ist wesentlich, daß das Entgratmesser bzw. der Messerhalter schwenkbar auf einem Kippbolzen im Werkzeughalter gehalten ist. Der Bolzen muß hierbei nicht notwendigerweise in der Achse des Werkzeughalters liegen, sondern er kann auch von der Drehachse versetzt angeordnet sein. Die damit verbundenen Vorteile werden später noch erläutert.

Als Rastvorrichtung dient hierbei erfindungsgemäß eine federbelastete Rastvorrichtung, die am Außenumfang des Entgratmesser angreift. Hierbei ist der Außenumfang des Entgratmessers im Bereich der Rastvorrichtung als Steuerkurve ausgebildet und in dem Bereich dieser Steuerkurve greift die erfindungsgemäße Rastvorrichtung ein. Die Rastvorrichtung kann hierbei verschiedene Ausführungsformen umfassen.

In einer ersten Ausführungsform ist vorgesehen, daß als Rastvorrichtung ein einfacher Federschenkel vorgesehen ist, der Teil einer geraden Biege- oder Stabfeder ist, wobei dieser Federschenkel bevorzugt als Flachfeder ausgebildet ist. Dieser Federschenkel greift mit seinem vorderen federnden Teil in die zugeordnete Ausnehmung der Steuerkurve am Entgratmesser ein.

Die Steuerkurve ist bevorzugt so ausgebildet, daß in der Entgratstellung des Entgratmessers ein starker Gegendruck von dem Federschenkel auf das Entgratmesser ausgeübt wird, so daß das Entgratmesser bevorzugt in seiner Entgratstellung bleibt und der Federschenkel nur den besagten vorher beschriebenen Schwenkwinkel zum Ausgleich unebener Bohrungsränder zuläßt.

Wenn aber der Druck auf das Entgratmesser durch Eintreten der Gleitpartie in die Bohrung zu stark wird, dann gerät der Federschenkel aus seiner Eingriffsposition an der Steuerkurve und gelangt auf einen anderen Ast der Steuerkurve, wo ein geringerer Gegendruck auf das Entgratmesser ausgeübt wird. Dieser geringere Gegendruck liegt dann am Entgratmesser während des Durchtritts durch die Durchgangsbohrung an.

Vorstehend wurde als Rastvorrichtung ein einfacher Federschenkel einer geraden Biegefeder beschrieben. Es ist ebenso möglich, statt dieses Federschenkels einen Stößel zu verwenden, der axial federbelastet in die zugeordnete Steuerkurve am Außenumfang des Entgratmessers eingreift, wobei eine gleiche Steuerkurve am Entgratmesser vorgesehen sein könnte.

In einer dritten Ausführungsform ist es vorgesehen, daß die Rastvorrichtung als federbelastete Kugel ausgebildet ist, die in eine ebenso zugeordnete Steuerkurve eingreift.

In einer weiteren Ausführung ist es vorgesehen, daß das Schneidmesser einschl. des Kippkörpers mit der Ausnehmung nicht einstückig ausgebildet sind, sondern daß das Schneidmesser und ein Messerhalter getrennt voneinander vorliegen.

Hierzu ist es erfindungsgemäß vorgesehen, daß das Schneidmesser in einer quer verlaufenden Bohrung eines Messerhalters angeordnet ist, wobei die Ausnehmung am Außenumfang des Messerhalters vorgesehen ist.

Bei dieser Ausführung kann demnach das Schneidmesser aus dem Werkzeug sehr leicht entnommen werden, wobei lediglich der Kippbolzen aus dem Grundkörper herausgenommen wird und anschließend das Messer aus der Bohrung des Messerhalters herausgezogen wird.

Weitere Ausgestaltungen und Vorteile der Erfindung ergeben sich aus den Unteransprüchen.

Die Erfindung wird nun anhand von einem Ausführungsbeispiel näher beschrieben.

Es zeigen:
- Figur 1:: schematisiert ein Entgratmesser nach der Erfindung in Seitenansicht, wobei der Werkzeughalter lediglich schematisiert angedeutet ist;
- Figur 2:: die Draufsicht auf das Entgratmesser nach Figur 1 in Richtung des Pfeiles II in Figur 1;
- Figur 3:: die Draufsicht auf das Entgratmesser in Pfeilrichtung III in Figur 2;
- Figur 4:: vergrößert die Vorderansicht der Steuerkurve des Entgratmessers;
- Figur 5:: den Werkzeughalter mit eingebautem Entgratmesser in Pfeilrichtung V in Figur 6;
- Figur 6:: die Seitenansicht des Werkzeughalters mit Entgratmesser in Pfeilrichtung VI in Figur 5;
- Figur 7:: den Eingriff einer geraden Biegefeder in die Steuerkurve des Entgratmesser in vergrößerter Darstellung;
- Figur 8:: das Entgratwerkzeug im Schnitt;
- Figur 9:: das Entgratwerkzeug, bestehend aus dem Werkzeughalter und dem Entgratmesser sowie dem Messerhalter in der Seitenansicht im Schnitt, in einer nach Figur 8 um 90° gedrehten Darstellung;
- Figur 10:: Schnitt gemäß der Linie X-X in Figur 8;
- Figur 11:: das Entgratmesser nach Figur 8, ebenfalls im Bearbeitungseingriff bei Bearbeitung eines größeren Bohrungsdurchmessers;
- Figur 12:: einen Schnitt gemäß der Linie XII-XII in Figur 11;
- Figur 13:: das auswechselbare Messer in Draufsicht;
- Figur 14:: Schnitt gemäß der Linie XIV-XIV in Figur 13;
- Figur 15:: die um 90° gedrehte Darstellung des Messers nach Figur 13;
- Figur 16:: den Messerhalter in Draufsicht;
- Figur 17:: Schnitt gemäß der Linie XVII-XVII in Figur 16;
- Figur 18:: Draufsicht auf den Messerhalter nach Figur 16 in den Pfeilrichtungen XVIII.

Das Entgratmesser 1 ist in einer schlitzförmigen Ausnehmung 22 in einem Werkzeughalter 2 drehbar gelagert, wobei die Ausnehmung 22 eine untere Öffnung 23 aufweist.

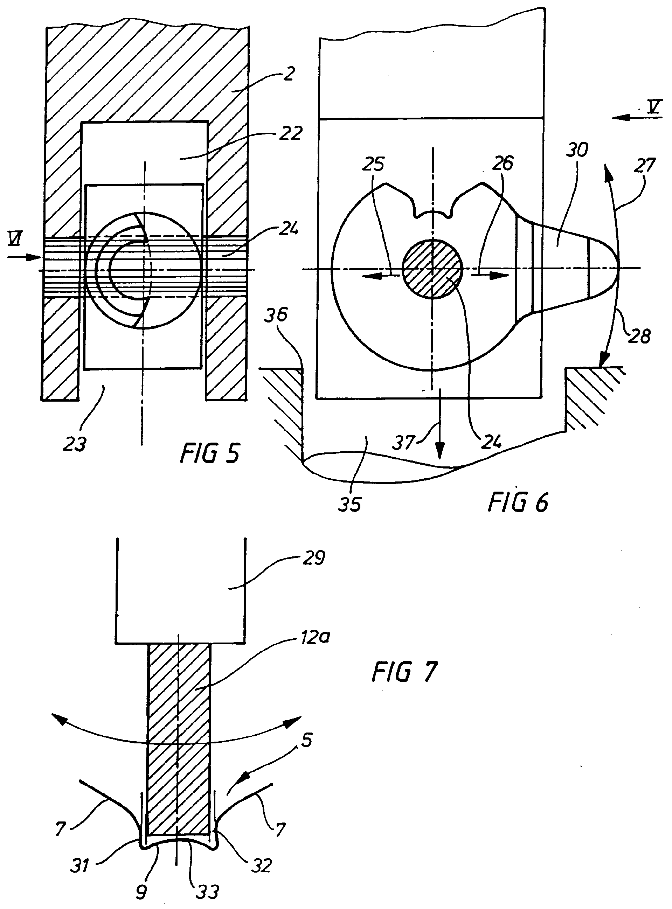

Statt der Öffnung 23 kann der Werkzeughalter auch an dieser Stelle geschlossen sein vorausgesetzt, daß die Ausnehmung 22 so groß ist, daß das Entgratmesser 1 mit seinem Schneidteil 30 in den Pfeilrichtungen 27,28 (Vergleiche Figur 6) vollständig in die Ausnehmung 22 hineinschwenken kann.

Zur Schwenklagerung des Entgratmessers 1 weist dieses eine Bohrung 3 auf, welche von einem Bolzen 24 durchgriffen ist. Der Bolzen ist in seitlichen Bohrungen im Werkzeughalter 2 fest gelagert. Die Mittenachse 4 des Werkzeughalters 2 muß nicht notwendigerweise mit der Mittenachse der Bohrung 3 zusammenfallen.

Es ist erfindungsgemäß vorgesehen, daß die Bohrung 3 mit dem zugeordneten Bolzen 24 in den Pfeilrichtungen 25,26 versetzt im Werkzeughalter 2 angeordnet werden kann, auf diese Weise kann die Schneidphase eingestellt werden.

Das Entgratmesser 1 besteht im wesentlichen aus einem flachen Körper, der an seiner einen Seite über Kanten 19,20 in einen rund ausgebildeten Schneidteil 30 übergeht.

Der flache, scheibenförmige Körper weist an seinem oberen Rand eine Ausnehmung 5 auf, die an ihrem Rand eine Steuerkurve 6 ausbildet.

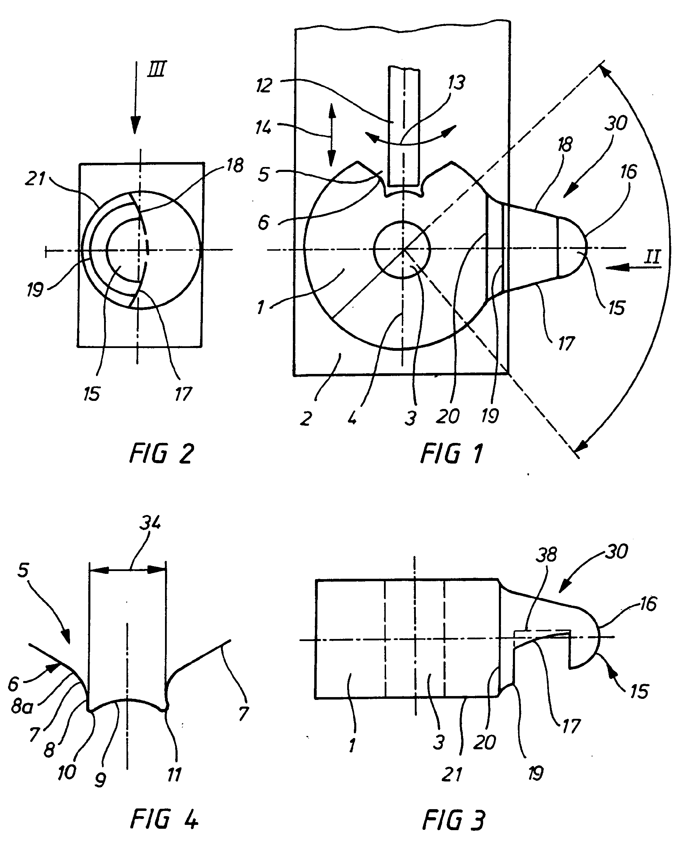

Die Einzelheiten der Steuerkurve werden anhand der Figur 4 näher erläutert.

Die Steuerkurve besteht aus einer mittleren Radiuskurve 9, an der sich über Kanten 10,11 jeweils genau zueinander symmetrische Kurven 7 anschließen. Jede Kurve 7 besteht aus einem steilen Kurvenast 8 und aus einem flacheren Kurvenast 8a.

Die Kurven 7 schließen spiegelsymmetrisch an die mittlere Radiuskurve 9 so an, daß sich ein Abstand 34 zwischen den beiden Kurven 7 ergibt. Die Kurven bilden somit eine Ausnehmung 5, welche die werkzeughalterseitig angeordnete Rastvorrichtung eingreift. Die Rastvorrichtung besteht gemäß dem Ausführungsbeispiel nach Figur 1 aus einer Biege- oder Stabfeder 12, die als Flachfeder ausgebildet ist und die mit ihrem freien, vorderen Ende in die Ausnehmung 5 eingreift. Anhand der Figur 7 ist diese Biegefeder als Federstößel 12a bezeichnet. Wichtig ist, daß ein mittiger Auflagepunkt 33 an der Radiuskurve 9 ausgebildet ist, und daß die seitlichen Stirnkanten des Federstößels 12a ein Spiel 31,32 zu den seitlich anschließenden Kurven 7 aufweisen.

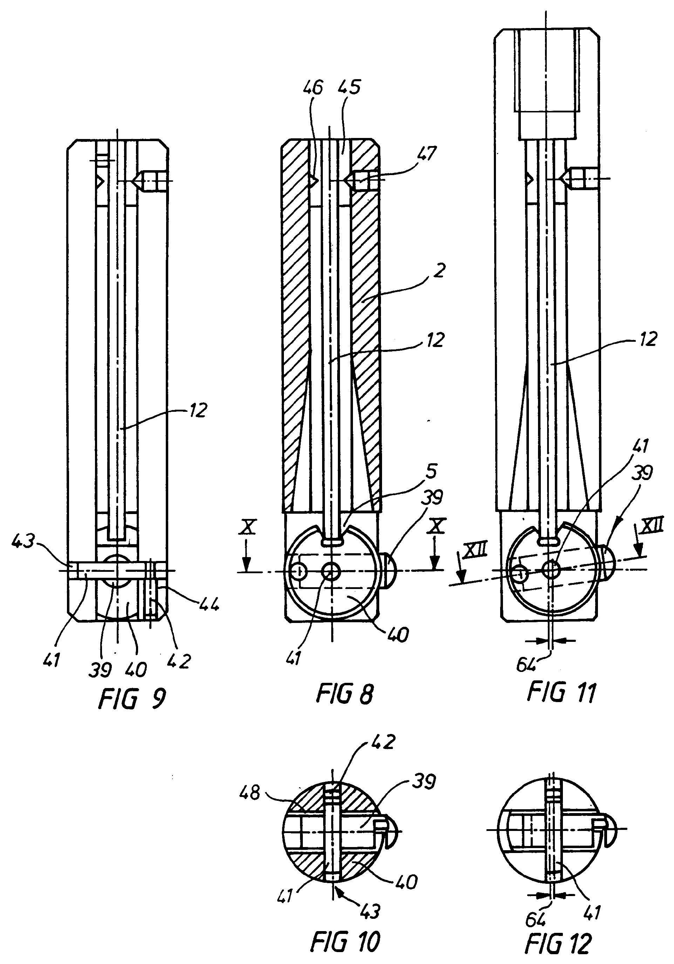

Damit ist eine verkantungsfreie Halterung des Stößels 12a oder der Stabfeder 12 in der Ausnehmung 5, nach den Figuren 1 und 8, gewährleistet.

Die Stabfeder 12 kann sich somit in den Pfeilrichtungen 13 verschwenken und greift also unter der Federlast seiner Biegefeder in die Ausnehmung 5 ein.

Es wurde eingangs bereits schon erwähnt, daß statt der Ausbildung des Stößels als Stabfeder 12 auch eine in den Pfeilrichtungen 14 federbelastete Stößelanordnung verwendet werden kann, wobei ein starrer Stößel 12a federbelastet in den Pfeilrichtungen 14 in die Ausnehmung 5 eingreift.

In den Figuren 1 und 7 ist der Eingriff der Stabfeder 12 mit dem Stößel in der Entgratposition des Entgratmessers dargestellt. Hierbei ergibt sich aus Figur 7, daß der Stößel mit seiner vorderen Stirnkante an dem mittleren Auflagepunkt 33 aufliegt. Fährt nun das Entgratmesser 1 in eine Bohrung 35 ein, dann trifft die an der Vorderseite des Schneidteils 30 angeordnete Schneidkante 17 auf den Bohrungsrand 36 auf und entgratet diesen, auch wenn der Bohrungsrand unrund und wellig sein sollte.

Wichtig ist nämlich, daß aufgrund der Biegeeigenschaft der Stabfeder 12 oder aufgrund der axialen Federeigenschaft eines Stößels 12a in den Pfeilrichtungen 14 nun ein gewißer Schwenkwinkel dem Entgratmesser 1 erlaubt wird, so daß es mit seiner Schneidkante 17 auch auf dem unrunden Bohrungsrand 36 formschlüssig aufsitzt und diesen unter leichter Verschwenkung entgegen der Federkraft der Rastvorrichtung entgratet.

Hierbei verbleibt der Stößel 12a gemäß Figur 7 im Bereich der mittigen Radiuskurve 9, wobei die seitlichen Kanten des Stößels unter Überwindung des Spiels 31,32 an den steilen Kurvenästen 8 der Kurve 7 auflaufen und daher ein weiteres Verschwenken des Entgratmessers 1 nicht gestattet ist.

Der Winkel, den die Schneidkante mit dem Bohrungsrand bildet, ist in relativ weiten Grenzen veränderbar. Es muß nur ein relativ geringer Winkel als Minimumanforderung vorhanden sein, um eine Schneidaktion am Bohrungsrand 36 zu gewährleisten.

Sobald beim weiteren Einfahren das Entgratwerkzeug in Pfeilrichtung 37 in die Bohrung 35 stattfindet, trifft die am Ende der Schneidkante 17 angeordnete Gleitpartie 16 auf den Bohrungsrand 36 auf und die Schneidaktion ist damit beendet.

Mit weiterem Eindringen des Entgratwerkzeuges gleitet nun die als Kugelteil 15 ausgebildete Gleitpartie am Innenrand der Bohrung entlang, wodurch jede Schneidaktion verhindert ist. Aufgrund dieses jetzt entstehenden Gegendruckes auf das Entgratmesser gelangt nun der Stößel 12 außer Eingriff mit den seitlichen steilen Kurvenästen 8 der Kurve 7 und gelangt in die flacheren Kurvenäste 8a, die sich stetig an die steilen Kurvenäste 8 der Kurve 7 anschließen.

Nachdem die Kurvenäste 8a flacher als die steileren Kurvenäste 8 ausgebildet sind, erfolgt somit ein relativ geringer Gegendruck auf das Entgratmesser, so daß die Gleitpartie ohne Beschädigung des Bohrungsinnenrandes durch die Durchgangsbohrung hindurchfahren kann. Es kommt hier also zu einer Anlage des Kugelteils 15 an der Innenseite der Bohrung.

Sobald die Bohrung auf der gegenüberliegenden Seite verlassen wurde, schnappt die Stabfeder 12 wieder in den Bereich der Ausnehmung 5 und gelangt somit wieder in die steileren Kurvenäste 8, wodurch das Entgratmesser wieder in seine Ausgangsstellung gerät und das Werkzeug kann nun in Gegenrichtung zur eingezeichneten Pfeilrichtung 37 nach oben gefahren werden, wodurch die am hinteren Ende des Schneidteils angeordnete Schneidkante 18 den rückwärtigen Teil der Durchgangsbohrung entgratet.

Der Vollständigkeit halber sei noch darauf hingewiesen, daß die Schneidkanten 17,18 symmetrisch zueinander angeordnet sind und in eine Kante 19 übergehen.

Die Schneidkanten 17,18 werden rund im Radius eingeschliffen, dadurch bildet sich eine tiefer gelegte Hohlkehle 38, die als Spanleitstufe dient.

Die Schneidkanten 17,18 enden radial einwärts in jeweils einer Kante 19, wobei die Kante 19 ihrerseits in eine Kante 20 übergeht und die Kante 20 in die scheibenförmige Umfangskante 21 des Entgratmessers übergeht.

Es wird noch erwähnt, daß der Stößel 12a gemäß Figur 7 an einer Halterung 29 des Werkzeughalters 2 ansetzt.

Die Halterung 29 ihrerseits ist fest mit dem Werkzeughalter verbunden.

Mit dem beschriebenen Entgratwerkzeug wird also eine sehr einfache Konstruktion gewährleistet, wobei ein automatisches Entgraten unter Anpassung auch an unebene Bohrungsränder gewährleistet ist. Mit der beschriebenen Anordnung können auch kleine Bohrungsdurchmesser entgratet werden bis hinunter zu Bohrungsdurchmessern von etwa 2 mm und aufwärts bis zu großen Bohrungsdurchmessern unbegrenzten Durchmessers.

Der Werkzeughalter kann hierbei aus Kunststoff oder Metall bestehen, ebenso kann das Entgratmesser aus Kunststoff bestehen, wobei anstatt der Schneidkanten entsprechende Schneidplättchen eingesetzt wären.

Im Gegensatz zu dem Ausführungsbeispiel nach den Figuren 1 bis 7 besteht eine zweistückige Ausführung zwischen dem Messerhalter und dem Schneidmesser nach dem Ausführungsbeispiel der Figuren 9 bis 18.

Das Entgratmesser 39 ist auswechselbar in dem Messerhalter 40 angeordnet, wobei der Messerhalter die gleiche Formgebung hat mit der Rastausnehmung wie es anhand des vorher beschriebenen Ausführungsbeispieles der Figuren 1 bis 7 beschrieben wurde.

Hierbei ist der Messerhalter 40 wiederum in einer Ausnehmung im Werkzeughalter 2 drehbar gelagert und ist hierbei um einen Kippbolzen 41 herum drehbar.

Der Kippbolzen 41 ist hierbei in einer Bohrung 43 im Grundkörper 2 eingeschraubt und wird als Sicherung gegen axiale Verschiebung durch eine quer hierzu verlaufende Schraube 42 geschützt. Die Schraube 42 ist hierbei in einer eigenen Bohrung 44 eingeschraubt, wobei die Bohrung 44 die Bohrung 43 schneidet. Somit stützt sich der Bolzen der Sicherungsschraube 42 an der einen Stirnseite des Kippbolzens 41 ab.

Selbstverständlich kann statt dieser Lagerung des Kippbolzens in Verbindung mit dem hier beschriebenen Bolzen auch eine andere Ausführungsform gewählt werden. Der Kippbolzen 41 kann z. B. als Schwerspannstift ausgebildet sein oder als einfache Schraube, die in eine entsprechende Gewindebohrung 43 eingeschraubt wird.

Die Stabfeder 12 wird in dem Grundkörper 2 durch einen Federhalter 45 gehalten, wobei der Federhalter 45 ein hülsenförmiges Teil ist, dessen zentrale Bohrung das obere Ende der Stabfeder 12 aufnimmt. Die Stabfeder 12 ist in dieser Bohrung geklemmt, geschweißt oder geklebt.

Der Federhalter 45 weist hierbei eine umlaufende Nut 46 auf, in welche eine Sicherungsschraube 47 eingreift. Auf diese Weise ist eine eindeutige Fixierung des Federhalters 45 und damit der Stabfeder 12 in dem Grundkörper 2 gewährleistet. Die axiale Länge der Stabfeder 12 ist nämlich außerordentlich wichtig, um den genauen Eingriff dieser Stabfeder 12 in den Bereich der Ausnehmung 5 im Messerhalter 40 zu gewährleisten.

Der Federhalter 45 sichert also die gesamte Stabfeder 12 auch gegen axiale Verschiebung im Grundkörper 2.

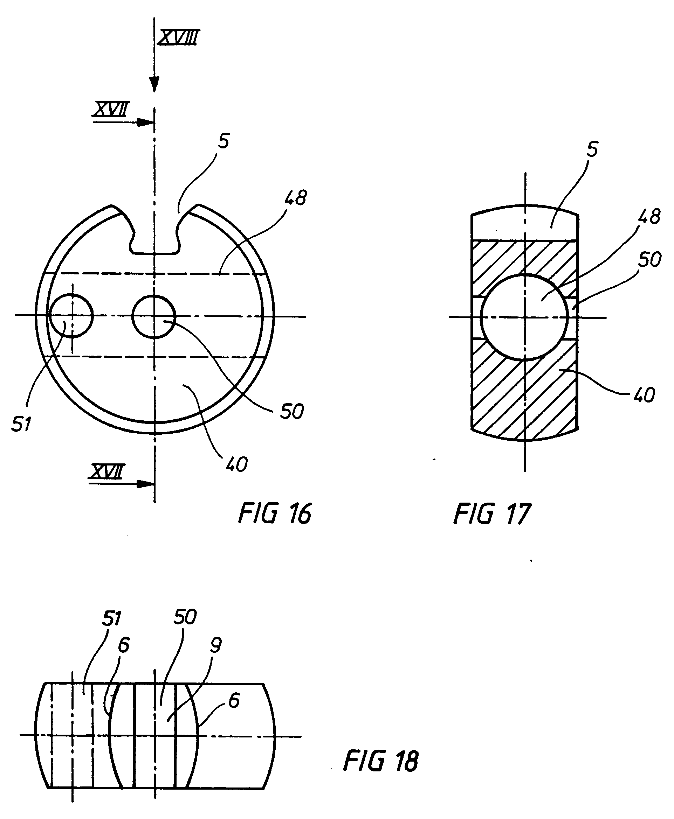

Wichtig bei dem Ausführungsbeispiel ist nun, daß das Messer 39 in einer quer verlaufenden Bohrung 48 im Messerhalter 40 auswechselbar gehaltert ist. Die Halterung des Messers 39 erfolgt hierbei dadurch, daß gemäß den Figuren 16 bis 18 der Messerhalter 40 die Bohrung 48 aufweist, in welches das Schneidmesser 39 eingeschoben wird. Zur Lagensicherung des Schneidmessers 39 in der Bohrung 48 dient hierzu eine Querbohrung 50, welche gemäß Figur 17 die größere Bohrung 48 schneidet. In die Querbohrung 50 wird gleichzeitig der Kippbolzen 41 eingeschoben, der seinerseits in der Bohrung 43 im Grundkörper 2 gehalten ist. Auf diese Weise wird gewährleistet, daß das Messer 39 durch den einzigen Kippbolzen 41 in dem Messerhalter 40 gehalten wird und der Kippbolzen 41 gleichzeitig das Drehlager für den Messerhalter 40 im Grundkörper 2 bildet. Es handelt sich also hierbei um eine einfache und kostengünstige Befestigung.

Damit wird gleichzeitig sichergestellt, daß der Kippbolzen 41 das Drehlager für den Messerhalter 40 bildet und gleichzeitig der zentrischen Lagerung des Messers 39 dient. Damit ist das Messer 39 optimal in der Bohrung 48 im Messerhalter 40 abgestützt und kann somit auch hohe Kräfte aufnehmen und auf den Messerhalter 40 übertragen.

Die weitere Querbohrung 51, die im radialen Abstand von der Bohrung 50 angeordnet ist, dient zur Montagehilfe, d.h. zur Erleichterung der Montage des Messers 39.

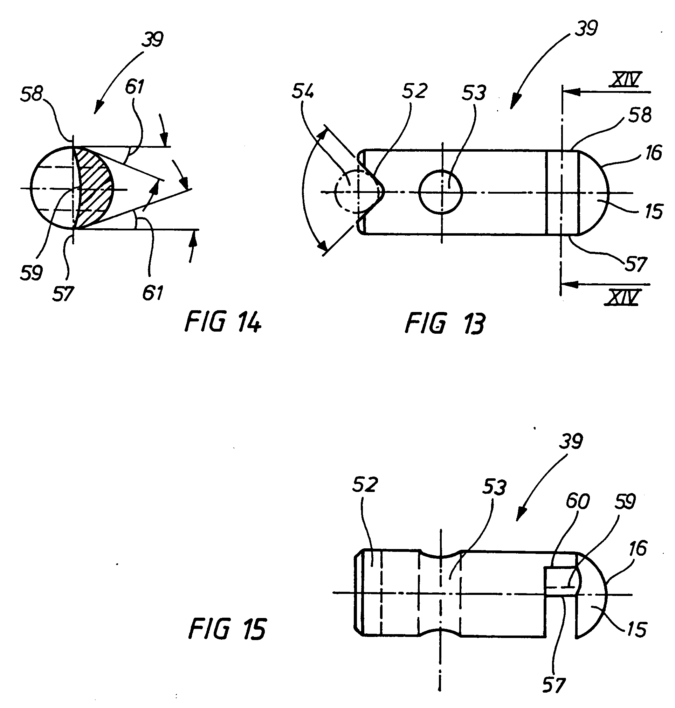

Das Messer 39 weist nämlich gemäß Figur 13 an seiner hinteren Stirnseite eine prismatische Ausnehmung 52 auf. Zur Montage des Messers wird zunächst in die Querbohrung 51 ein Sicherungsstift 54 eingeschlagen. Sodann wird das Messer mit seiner Stirnseite und der prismatischen Ausnehmung 52 nach hinten gerichtet in die Bohrung 48 eingeführt solange bis sich der Sicherungsstift 54 mit seinem Außenumfang bündig in die prismatische Ausnehmung 52 anlegt und zentriert. Gleichzeitig ist damit gewährleistet, daß die Bohrung 53 im Messer 39 zu der Bohrung 50 im Messerhalter 40 fluchtet. Das so vormontierte Messer wird zusammen mit dem Messerhalter 40 in den Grundkörper 2 eingeführt und es wird dann der Kippbolzen 41 in die zueinander fluchtenden Bohrungen 43,50 und 53 eingeführt und danach mit der Sicherungsschraube 42 gesichert.

Die Anlage des Sicherungsstiftes 54 an der prismatischen Ausnehmung 52 dient also zu einer Zentrierung des Messers 39 im Messerhalter 40, um die Bohrungen 43,50 und 53 nachfolgend für das Eintreiben des Kippbolzens 41 in fluchtende Gegenüberstellung zu bringen.

Es wird noch angefügt, daß die größere Bohrung 48 zur Aufnahme des Entgratmessers 39 als Durchgangsbohrung ausgebildet ist, weil dies aus fertigungstechnischen Gründen einfach ist.

Als wesentlicher weiterer Unterschied gegenüber dem vorher beschriebenen Ausführungsbeispiel gemäß den Figuren 1 bis 7 ist bei dem Ausführungsbeispiel nach den Figuren 9 bis 18 noch anzufügen, daß auch die Schneidpartie des Entgratmessers 39 anders ausgebildet ist.

Beim Ausführungsbeispiel nach Figur 1 liegen zwei schräge Schneidkanten 17,18 einander gegenüber, während beim Ausführungsbeispiel nach der Figur 13 gerade ausgebildete Schneidkanten 57,58 einander gegenüberliegen. An der stirnseitigen Ausbildung des Entgratmessers 39 hat sich hierbei nichts geändert, d.h. es ist ebenfalls ein Kugelteil 15 vorhanden mit am Außenumfang ausgebildeter Gleitpartie 16, deren Funktion anhand des Ausführungsbeispiels nach den Figuren 1 bis 7 bereits schon beschrieben wurde.

Bei der Anordnung von gerade ausgebildeten, zueinander parallelen Schneidkanten 57,58 besteht der Vorteil, daß der Angriff der Schneidkanten am Werkstück aggressiver ist, weil bei schräg angeordneten Schneidkanten das Kippmesser mehr zum Abkippen neigt und hiermit ein Kippdruck erzeugt wird, während bei gerade verlaufenden Schneidkanten 57,58, die zueinander parallel angeordnet sind, der entsprechende Kippdruck nicht so stark ist wie bei dem vorher beschriebenen Ausführungsbeispiel. Das Messer nach der Figur 13 kann also aggressiver schneiden ohne daß ein unerwünscht großer Kippdruck auf den Rastmechanismus ausgeübt wird. Im übrigen sind die geraden Schneidkanten aus fertigungstechnischen Gründen leichter zu bearbeiten als die vorher beschriebenen schrägen Schneidkanten 17,18.

Aus Figur 14 in Verbindung mit Figur 15 ergibt sich im übrigen noch die Formgebung der Spanfläche 59 und der dahinterliegenden Freifläche 60, die gemäß Figur 14 den Freiwinkel 61 bildet.

Die Figuren 11 und 12 zeigen im übrigen, daß auch ein leicht gekipptes Entgratmesser 39 noch schneidfähig ist, wie anhand der Figuren 11 und 12 näher erläutert wird.

Bei der Kipplage des Entgratmessers 39 gemäß Figur 11 und 12 sind die Schneidflächen 57 bzw. 58 dennoch in Eingriff mit dem Werkstück.

Das Ausführungsbeispiel nach den Figuren 11 und 12 unterscheidet sich aber von dem Ausführungsbeispiel nach den Figuren 8 bis 10 dadurch, daß bei dem Ausführungsbeispiel nach Figur 11 und 12 eine Abwandlung gezeigt ist. Nach Figur 8 ist bei dem dortigen Kippmesser eine zentrische Bohrung für den Kippbolzen 41 dargestellt. Das heißt, die Angriffslinie der Stabfeder 12 schneidet genau die Mittenlinie durch die Bohrung für den Kippbolzen 41.

Bei dem Ausführungsbeispiel nach den Figuren 11 und 12 ist hingegen eine exzentrische Anordnung des Kippbolzens 41 in bezug zur Angriffslinie der Stabfeder 12 dargestellt.

Man sieht hierbei, daß der Kippbolzen 41 um den Abstand 64 aus der mittigen Angriffslinie der Stabfeder 12 heraus nach vorne versetzt ist, d.h. in Richtung zu den einander gegenüberliegenden Schneidkanten 57,58 des Entgratmessers 39.

Somit ist es vom Rahmen der vorliegenden Erfindung auch umfaßt, daß der Messerhalter 40 exzentrisch zur Quermittenlinie des Grundkörpers 2 angeordnet ist und daher exzentrisch in der Ausnehmung des Grundkörpers 2 verschwenkabr ist.

Damit besteht der wesentliche Vorteil, daß, wenn man den gesamten Messerhalter exzentrisch in dem Grundkörper lagert, daß man dann je nach der Ausführung unterschiedliche Bohrungsdurchmesser entgraten kann.

Will man z. B. ein Bohrungsdurchmesser von 13 mm entgraten, dann wählt man eine genaue zentrische Anordnung des Messerhalters 40 in dem Grundkörper 2. Will man aber einen Bohrungsdurchmesser von z. B. 14 mm entgraten, dann versetzt man den Kippbolzen 41 zusammen mit seiner Bohrung im Messerhalter um den Abstand 64 (0,5 mm) nach rechts, um somit dann Bohrungsdurchmesser von z. B. 14 mm zu entgraten und will man einen Bohrungsdurchmesser von z. B. 12 mm entgraten, dann wählt man den Abstand 64 um einen halben Millimeter nach links, d.h. der Kippbolzen 41 wird nach links exzentrisch im Grundkörper 2 angeordnet und bei immer gleichem Messer können somit Bohrungsdurchmesser von 12 mm entgratet werden.

Damit wird der Ersatzteilbedarf wesentlich vermindert, denn der Messerhalter 40 und das Entgratmesser 39 können immer gleich verwendet werden und der Grundkörper 2 kann ebenfalls immer gleich verwendet werden mit Ausnahme der Anordnung der Bohrung 43, die je nach der Fallgestaltung - wie vorher beschrieben - im Grundkörper entweder zentrisch oder versetzt nach vorne bzw. versetzt nach hinten angeordnet wird.

## Patentansprüche

1. Entgratwerkzeug mit Kippmesser (1) zum Entgraten von Bohrungsrändern (36) mit gerader oder unrunder Form mit einem um seine Längsachse (4) drehbar angetriebenen Werkzeughalter, in dem ein oder mehrere Entgratmesser (1,39) in Verbindung mit einer Rastvorrichtung in vertikaler Richtung kippbar angeordnet sind, wobei das Entgratmesser (1,39) beim Eintritt des Werkzeughalters in die Durchgangsbohrung einwärts kippt und die Schneidkante außer Eingriff mit dem Bohrungsrand gerät, wobei das Entgratmesser (1) bzw. der Messerhalter (40) im Grundkörper (2) an einem Kippbolzen (24,41) gelagert sind.
**dadurch gekennzeichnet,** daß die Rastvorrichtung als Stabfeder (12) ausgebildet ist, welche in eine kurvenartige Ausnehmung (5) am Außenumfang des Entgratmessers (1) bzw. des Messerhalters (40) eingreift.

2. Entgratwerkzeug nach Anspruch 1, **dadurch gekennzeichnet**, daß das Schneidmesser (1) bzw. der Messerhalter (40) im Schwenkbereich innerhalb des Grundkörpers (2) annähernd kreisrund ausgebildet sind.

3. Entgratwerkzeug nach Anspruch 1, **dadurch gekennzeichnet**, daß das Entgratmesser (1,39) eine vordere (17,57) und eine rückwärtige Schneidkante (18,58) aufweist.

4. Entgratwerkzeug nach Anspruch 1, **dadurch gekennzeichnet**, daß im Werkzeughalter bzw. Grundkörper (2) zwei Entgratmesser (1,39) auf einem gemeinsamen Kippbolzen (24,41) verschwenkbar und gegeneinander gerichtet angeordnet sind.

5. Entgratwerkzeug nach Anspruch 1, **dadurch gekennzeichnet**, daß die Rastausnehmung (5) am Außenumfang des Entgratmessers (1) aus einer mittigen Radiuskurve (9) besteht, in deren Mittenbereich ein Auflagepunkt (33) für den Stößel (12a) definiert ist, daß sich beiderseits der Radiuskurve spiegelsymmetrisch Kurven (7) anschließen, die so gegeneinander gerichtet sind, daß die Kurven (7) zusammen mit der mittleren Radiuskurve (9) eine Rastausnehmung (5) für den Eingriff des Stößels (12a) bilden.

6. Entgratwerkzeug nach Anspruch 5, **dadurch gekennzeichnet**, daß jede Kurve (7) aus einem steilen, unmittelbar über eine Kante (10,11) anschließenden Kurvenast (8) besteht, der stetig jeweils in einen flacheren Kurvenast (8a) übergeht, (Figur 4).

7. Entgratwerkzeug nach den Ansprüchen 1 bis 6, **dadurch gekennzeichnet,** daß die Rastvorrichtung aus einem in axialer Richtung (14) federbelastet in die Rastausnehmung (5) eingreifenden, starren Stößel (12a) besteht.

8. Entgratwerkzeug nach den Ansprüchen 1 bis 6, **dadurch gekennzeichnet,** daß die Rastvorrichtung aus einer federbelastet im Werkzeughalter (2) angeordneten Kugel besteht, die in die Rastausnehmung (5) eingreift.

9. Entgratwerkzeug nach Anspruch 1, **dadurch gekennzeichnet,** daß die kurvenartige Ausnehmung (5) eine Steuerkurve derart ausbildet, daß in der Entgratstellung ein starker Gegendruck auf das Entgratmesser (1,39) ausgeübt wird und daß zum Ausgleich unebener Bohrungsränder die Rastvorrichtung innerhalb eines vorgegebenen kleinen Schwenkwinkels aufgrund der federnden Eigenschaften der Stabfeder (12) oder des Stößels (12a) nachgiebig ausschwenkt.

10. Entgratwerkzeug nach Anspruch 1, **dadurch** **gekennzeichnet,** daß das Schneidmesser (39) in einer quer verlaufenden Bohrung (48) eines Messerhalters (40) angeordnet ist, wobei die Ausnehmung (5) am Außenumfang des Messerhalters (40) vorgesehen ist, (Figur 17).

11. Entgratwerkzeug nach Anspruch 1, **dadurch gekennzeichnet**, daß der Kippbolzen (41) durch eine quer verlaufende Schraube (42) gegen axiale Verschiebung gesichert ist.

12. Entgratwerkzeug nach Anspruch 1, **dadurch gekennzeichnet**, daß die Stabfeder (12) in einem Federhalter (45) am Grundkörper (2) gelagert ist, wobei eine Sicherungsschraube (47) in eine umlaufende Nut (46) des Federhalters (45) eingreift.

13. Entgratwerkzeug nach Anspruch 10, **dadurch gekennzeichnet**, daß das Schneidmesser (39) an seiner hinteren Stirnseite eine Ausnehmung (52) aufweist, welche innerhalb des Messerhalters (40) an einem Sicherungsstift (54) anliegt.

14. Entgratwerkzeug nach Anspruch 10, **dadurch gekennzeichnet**, daß das Schneidmesser (39) gerade ausgebildete, parallele Schneidkanten (57,58) aufweist, die einander gegenüberliegen.

15. Entgratwerkzeug nach Anspruch 1, **dadurch gekennzeichnet**, daß der Kippbolzen (41) oder der Messerhalter (40) in einem Abstand (64) exzentrisch in der Angriffslinie der Rastvorrichtung angeordnet sind.

## Claims

1. A deburring tool with a tilting blade (1) for the deburring of bore edges (36) with a straight or non-circular form with a tool holder, rotatably driven about is longitudinal axis (4), in which one or more deburring blades (1,39) are arranged in connection with a detent device in vertical direction so as to be able to be tilted, in which the deburring tool (1, 39) on entry of the tool holder into the through bore, tilts inwards and the cutting edge comes out of engagement with the bore edge, in which the deburring blade (1) or the blade holder (40) are mounted in the base body (2) on a pivot bolt (24,41), characterised in that the detent device is constructed as bar spring (12), which engages in a curve-like recess (5) on the outer circumference of the deburring blade (1) or of the blade holder (40).

2. A deburring tool according to Claim 1, characterised in that the cutting blade (1) or the blade holder (40) are constructed so as to be approximately circular in the region of pivoting inside the base body (2).

3. A deburring tool according to Claim 1, characterised in that the deburring blade (1,39) has a front cutting edge (17,57) and a rear cutting edge (18,58).

4. A deburring tool according to Claim 1, characterised in that in the tool holder or base body (2) two deburring blades (1,39) are arranged so as to be orientable on a common pivot bolt (24,41) and directed towards each other.

5. A deburring tool according to Claim 1, characterised in that the detent recess (5) on the outer circumference of the deburring blade (1) consists of a symmetric radius curve (9), in the central region of which a support point (33) for the striker (12a) is defined, that curves (7) join on to the radius curve on both sides in mirror symmetry, which curves (7) are directed towards each other such that the curves (7) together with the central radius curve (9) form a detent recess (5) for the engagement of the striker (12a).

6. A deburring tool according to Claim 5, characterised in that each curve (7) consists of a steep curve branch (8), immediately adjoining via an edge (10,11), which branch (8) continues steadily in each case into a flatter curve branch (8a) (Figure 4).

7. A deburring tool according to Claims 1 to 6, characterised in that the detent device consists of a rigid striker (12a) engaging in axial direction (14), spring-loaded, in the detent recess (5).

8. A deburring tool according to Claims 1 - 6, characterised in that the detent device consists of a ball arranged, spring-loaded, in the tool holder (2), which ball engages in the detent recess (5).

9. A deburring tool according to Claim 1, characterised in that the curve-like recess (5) forms a control curve such that in the deburring position a strong counter-pressure is exerted onto the deburring blade (1,39) and that to balance out uneven bore edges, the detent device pivots out flexibly within a predetermined small pivot angle owing to the elastic characteristics of the bar spring (12) or of the striker (12a).

10. A deburring tool according to Claim 1, characterised in that the cutting blade (39) is arranged in a bore (48) of a blade holder (40) running transversely, in which the recess 5) is provided on the outer circumference of the blade holder (40) (Figure 17).

11. A deburring tool according to Claim 1, characterised in that the pivot bolt (41) is secured against axial displacement by a screw (42) running transversely.

12. A deburring tool according to Claim 1, characterised in that the bar spring (12) is mounted in a spring holder (45) on the base body (2), in which an anchoring screw (47) engages in a circumferential groove (46) of the spring holder (45).

13. A deburring tool according to Claim 10, characterised in that the cutting blade (39) has on its rear end face a recess (52), which lies inside the blade holder (40) against a safety pin (54).

14. A deburring tool according to Claim 10, characterised in that the cutting blade (39) has parallel cutting edges (57, 58), constructed so as to be straight, which lie opposite each other.

15. A deburring tool according to Claim 1, characterised in that the pivot bolt (41) or the blade holder (40) are arranged at a distance (64) eccentrically in the line of application of the detent device.

## Revendications

1. Outil d'ébavurage à lame pivotante (1), pour ébavurer les bords (36) d'un alésage, de forme droite ou non circulaire, comportant un porte-outil apte à être entraîné en rotation autour de son axe longitudinal (4), dans lequel une ou plusieurs lames d'ébavurage (1,39) sont disposées avec une liberté de pivotement dans la direction verticale, en liaison avec un organe d'encliquetage, grâce à quoi la lame d'ébavurage (1,39) lorsque le porte-outil pénètre dans l'alésage traversant pivote en dedans et l'arête de coupe se libère de son contact avec le bord du perçage, la lame d'ébavurage (1) ou le porte-lame (40) étant en outre monté dans le bâti (2), sur un axe de pivotement (24,41), caractérisé en ce que l'organe d'encliquetage présente la forme d'une lame de ressort (12) qui s'encrante dans une découpe (5) conformée en came, sur le pourtour extérieur de la lame d'ébavurage (1) ou du porte-lame (40).

2. Outil d'ébavurage selon la revendication 1, caractérisé en ce que la lame de coupe (1) ou le porte-lame (40) sont, dans la plage de pivotement à l'intérieur du bâti (2), réalisés sous une forme approximativement circulaire.

3. Outil d'ébavurage selon la revendication 1, caractérisé en ce que la lame d'ébavurage (1,39) présente une arête de coupe avant (17,57) et une arête de coupe arrière (18,58).

4. Outil d'ébavurage selon la revendication 1, caractérisé en ce que deux lames d'ébavurage (1,39) sont disposées, selon un montage pivotant, l'une tournée vers l'autre, sur un axe de pivotement commun (24,41), dans le porte-outil ou le bâti (2).

5. Outil d'ébavurage selon la revendication 1, caractérisé en ce que la découpe d'encliquetage (5), située sur le pourtour extérieur de la lame d'ébavurage (1), est formée par une came centrale de rayon constant (9), dans la zone médiane de laquelle est défini un point d'appui (33) pour le plongeur (12a), et en ce que des cames (7) se raccordent à la came de rayon constant, de part et d'autre de celle-ci, selon une disposition énantiomorphe, et sont tournées l'une vers l'autre d'une façon telle que les cames (7) forment, conjointement avec la came centrale de rayon constant (9), une découpe d'encliquetage (5) pour l'encrantage du plongeur (12a).

6. Outil d'ébavurage selon la revendication 5, caractérisé en ce que chaque came (7) se compose d'une branche de came de forte pente (8), à raccordement direct par l'intermédiaire d'un angle vif (10,11), et qui se prolonge respectivement, de façon continue, par une branche de came aplatie (8a) (figure 4).

7. Outil d'ébavurage selon les revendications 1 à 6, caractérisé en ce que l'organe d'encliquetage se compose d'un plongeur rigide (12a), contraint par ressort en direction axiale (14) et s'encrantant dans la découpe d'encliquetage (5).

8. Outil d'ébavurage selon les revendications 1 à 6, caractérisé en ce que l'organe d'encliquetage se compose d'une bille chargée par ressort, disposée dans le porte-outil (2), bille qui s'encrante dans la découpe d'encliquetage (5).

9. Outil d'ébavurage selon la revendication 1, caractérisé en ce que la découpe (5), conformée en came, constitue une came de commande d'une façon telle que, dans la position d'ébavurage, il s'exerce, sur la lame d'ébavurage (1,39), une forte contre-pression et que, pour égaliser des bords d'alésage irréguliers, l'organe d'encliquetage pivote, par flexibilité, à l'intérieur d'un petit angle de pivotement prédéterminé, du fait des propriétés d'élasticité de la lame de ressort (12) ou du plongeur (12a).

10. Outil d'ébavurage selon la revendication 1, caractérisé en ce que la lame de coupe (39) est disposée dans un alésage transversal (48) d'un porte-lame (40), la découpe (5) étant ménagée sur le pourtour extérieur du porte-lame (40) (figure 17).

11. Outil d'ébavurage selon la revendication 1, caractérisé en ce que l'axe de pivotement (41) est immobilisé contre tout déplacement axial, au moyen d'une vis transversale (42).

12. Outil d'ébavurage selon la revendication 1, caractérisé en ce que la lame de ressort (12) est retenue dans une monture de ressort (45) sur le bâti (2), une vis de fixation (47) pénétrant dans une gorge circulaire (46) de la monture de ressort (45).

13. Outil d'ébavurage selon la revendication 10, caractérisé en ce que la lame de coupe (39) présente, sur son chant arrière, une découpe (52) qui s'applique contre une tige d'arrêt (54), à l'intérieur du porte-lame (40).

14. Outil d'ébavurage selon la revendication 10, caractérisé en ce que la lame de coupe (39) présente des arêtes de coupe rectilignes parallèles (57,58) qui s'étendent l'une en face de l'autre.

15. Outil d'ébavurage selon la revendication 1, caractérisé en ce que l'axe de pivotement (41) ou le porte-lame (40) sont disposés dans la ligne d'action de l'organe d'encliquetage, excentré d'une certaine distance (64).
